Europäisches Patentamt

European Patent Office

Office européen des brevets

(11) Veröffentlichungsnummer: **0 292 642 B1**

(12) **EUROPÄISCHE PATENTSCHRIFT**

(45) Veröffentlichungstag der Patentschrift: **08.07.92**

(21) Anmeldenummer: **88101786.7**

(22) Anmeldetag: **08.02.88**

(51) Int. Cl.5: **B23F 5/02**, B23F 23/00, G05B 19/18

(54) Verfahren und Vorrichtung zur Regelung des Wälzantriebes einer Zahnradschleifmaschine.

(30) Priorität: **21.05.87 DE 3717078**

(43) Veröffentlichungstag der Anmeldung:
**30.11.88 Patentblatt 88/48**

(45) Bekanntmachung des Hinweises auf die Patenterteilung:
**08.07.92 Patentblatt 92/28**

(84) Benannte Vertragsstaaten:
**DE FR GB IT**

(56) Entgegenhaltungen:
**DE-C- 3 515 913**
**FR-A- 1 515 671**

**TZ FUR PRAKTISCHE METALL- BEARBEI-TUNG, 70. Jahrgung, 1976, Heft 9, "Karl-Marx--Stadt" H.J. KEUGE et al. "Elektro- nische Zwanglaufeinrichtung fUr Verzahnung" Seiten 287-289**

(73) Patentinhaber: **HURTH MASCHINEN UND WERKZEUGE G.m.b.H.**
**Moosacher Strasse 36**
**W-8000 München 40(DE)**

(72) Erfinder: **Fischer, Heinrich R.**
**Schildensteinstrasse 12**
**W-8000 München 80(DE)**

(74) Vertreter: **Stahl, Gerhard F.W.**
**Patentanwalt Dipl.-Ing. Gerhard F.W. Stahl**
**Heilmannstrasse 10**
**W-8000 München 71(DE)**

EP 0 292 642 B1

EP 0 292 642 B1

**Beschreibung**

Die Erfindung betrifft ein Verfahren zur Regelung des Verhältnisses von Rotations- und Translationsbewegung an dem Wälzantrieb einer Zahnradschleifmaschine gemäß dem Oberbegriff des Patentanspruchs 1.

Die Erfindung betrifft ferner eine Vorrichtung gemäß dem Oberbegriff des Patentanspruchs 2.

Bei einer Zahnradschleifmaschine muß der Rotationsanteil der Wälzbewegung geändert werden, wenn Zahnräder mit unterschiedlichem Durchmesser gefertigt werden. Zu diesem Zweck ist es bekannt, mit wechselndem Durchmesser des Werkstücks auch den Rollbogen eines Wälzgetriebes auszutauschen. Ein derartiger Vorgang ist aber mit einer beträchtlichen Verlängerung der Umrüstzeit verbunden.

Aus der DE-C-35 15 913 ist auch bereits ein Verfahren und eine Vorrichtung für einen stufenlos verstellbaren Wälzantrieb gemäß dem Oberbegriff des Patentanspruchs 1 bzw. 2 bekannt. Dabei sind der angetriebene Rollbogenschlitten und der Rollbandschlitten über Gelenke mit einer Schwinge verbunden, die an einem dem Werkstückdurchmesser entsprechend verstellbaren Polpunkt am Mascinengestell angelenkt ist und die Bewegung des Rollbogenschlittens auf den Rollbandschlitten überträgt. Wie sich in der Praxis gezeigt hat, ist dieser bekannte Wälzantrieb infolge seiner Kinematik nicht übermäßig steif und daher zur Bearbeitung hochgenauer Zahnräder weniger geeignet.

Der Erfindung liegt die Aufgabe zugrunde, das gattungsgemäße Verfahren dahingehend weiterzubilden, daß sich eine bessere Synchronisierung der translatorischen Bewegungen des Rollbogenschlittens und des Rollbandschlittens und damit eine genau definierte Wälzbewegung des Rollbogens ergibt.

Diese Aufgabe wird gelost mit einem Verfahren gemäß dem Kennzeichen des Patentanspruchs 1.

Wie dies in Verbindung mit der Beschreibung eines bevorzugten Ausführungsbeispiels der Erfindung noch näher erläutert wird, ist es bei der Bearbeitung eines Zahnrades, dessen Durchmesser größer ist als derjenige des Rollbogens, erforderlich, dem Rollbandschlitten eine Bewegung zu erteilen, die zu derjenigen des Rollbogenschlittens gleichgerichtet ist, um den Drehwinkel des Rollbogens zu verkleinern. Das bedeutet, daß die Geschwindigkeit des Rollbandschlittens relativ zum Rollbogenschlitten stets kleiner ist als relativ zum Maschinengestell. Demzufolge kann die Bewegung des Rollbandschlittens relativ zum Rollbogenschlitten, d.h. der Abstand zwischen diesen beiden Schlitten mit einer elektrischen Meßeinrichtung wesentlich genauer gemessen werden als der vom Rollbandschlitten gegenüber dem Maschinengestell zurückgelegte Weg. Da die von der Meßeinrichtung ermittelten Meßwerte in einem Rechner verarbeitet werden, ist auch zu berücksichtigen, daß der Frequenz der Meßimpulse eine durch die Leistungsfähigkeit des Rechners bedingte natürliche Grenze gesetzt ist. Auch aus diesem Grund ist die Messung des Abstandes zwischen den beiden Schlitten wesentlich vorteilhafter als die Messung des vom Rollbandschlitten gegenüber dem Maschinengestell zurückgelegten Weges. Durch das erfindungsgemäße Verfahren werden auch Meßfehler vermieden, die sich aus Längenveränderungen des Maschinengestells infolge von Temperaturschwankungen ergeben.

Eine Vorrichtung zur Durchführung des erfindungsgemäßen Verfahrens ist in den Patentansprüchen 2 bis 5 angegeben.

Ein Ausführungsbeispiel der Erfindung ist in der Zeichnung dargestellt und wird nachfolgend näher erläutert. Es zeigen:

Fig. 1    eine schematische Darstellung einer Zahnradschleifmaschine, bei der die Erfindung angewendet wird,

Fig. 2    einen Schnitt durch einen Bereich der Maschine nach Fig. 1, und

Fig. 3    eine Darstellung ähnlich wie Fig. 2, in der die Regelung des Antriebs des Rollbandschlittens in Abhängigkeit vom Antrieb des Rollbogenschlittens schematisch dargestellt ist.

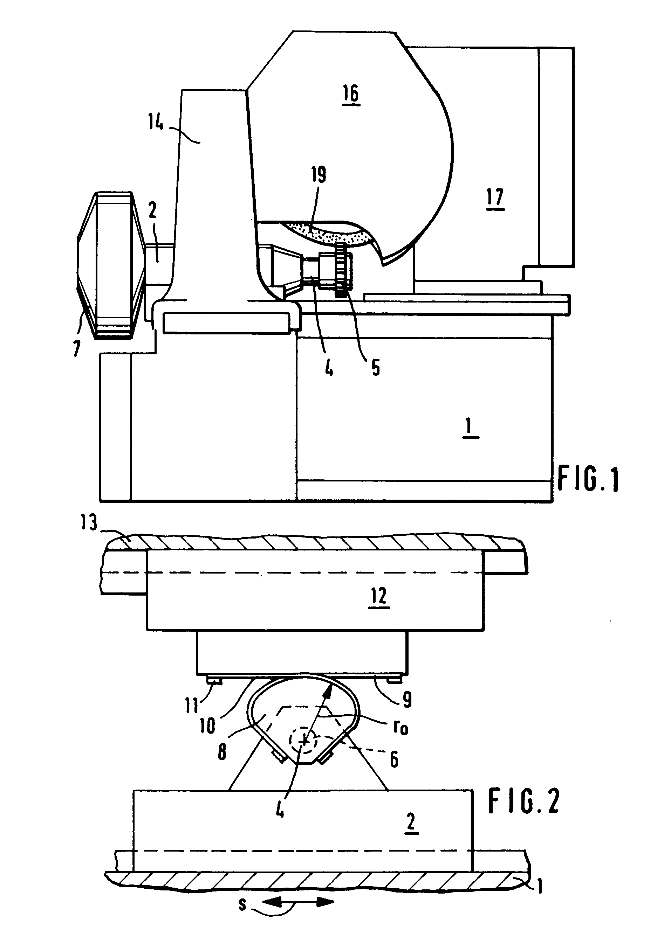

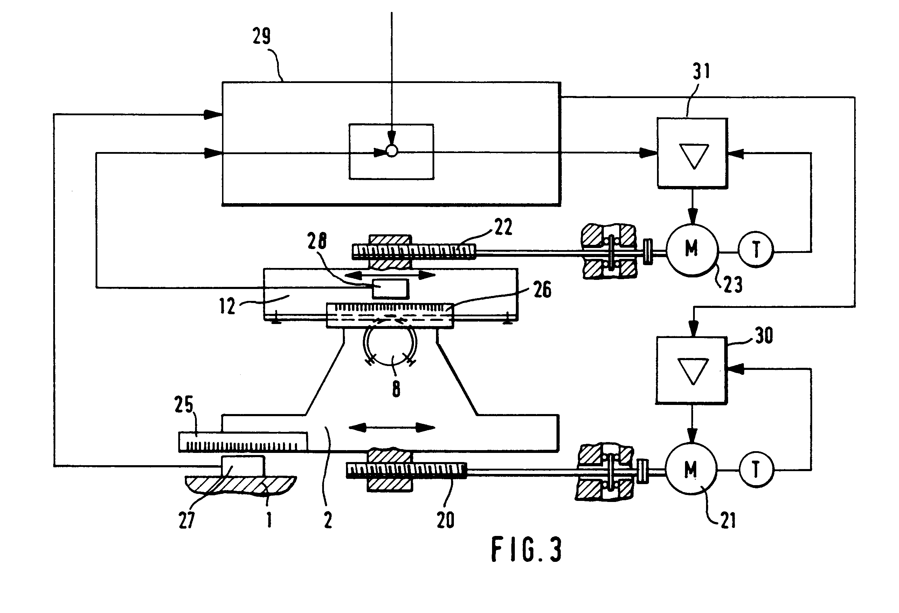

Auf einem Maschinenständer 1 einer Zahnrad-Schleifmaschine ist ein Rollbogenschlitten 2 in einer geeigneten Führung senkrecht zur Zeichenebene (Fig. 1) hin- und hergehend verschiebbar und hierzu antreibbar gelagert. Die Mittel zum Antrieb der Hin- und Herbewegung sind in den Fig. 2 und 3 dargestellt und werden im folgenden noch näher erläutert. Quer zur Bewegungsrichtung des Rollbogenschlittens 2 ist eine bekannte und daher nicht ausführlich gezeichnete Werkstückspindel 4 gelagert. Die Werkstückspindel 4 wird an ihrem vom Werkstück 5 abgewendeten Ende von einer Rollbogenhülse 6 umhüllt. Die Werkstückspindel 4 ist zusammen mit der Rollbogenhülse 6 quer zur Achse der Werkstückspindel hin-und hergehend verschiebbar angeordnet, sie sind aber nicht parallel zu ihrer Achse längsverschiebbar. Das Werkstück 5 führt also relativ zu einer Schleifscheibe 19 ausschließlich einen Tauchvorschub in Richtung der Zahnhöhe aus. An dem vom Werkstück abgewendeten Ende sind Werkstückspindel 4 und Rollbogenhülse 6 mit einer an sich bekannten Teilungseinrichtung 7, von der in Fig. 1 nur das Gehäuse gezeigt ist, gekuppelt. Die Rollbogenhülse 6 und die Werkstückspindel 4 können in gleichen Lagern gelagert sein. An dem von der Teilungseinrichtung 7 abgewendeten Ende der Werkstückspindel 4 kann das Werkstück 5, bei dem es sich um ein hochgenau zu schleifendes Zahnrad od. dgl., z.B. ein Schabrad oder ein Lehrzahnrad handelt, aufgespannt werden. Auf der Rollbogenhülse 6 ist ein Rollbogen 8 aufgespannt, ggf. austauschbar und relativ zur Rollbogenhülse einstellbar. An dem Rollbogen sind Rollbänder 9, 10 befestigt, die mit ihrem anderen Ende in geeigneter Weise nachspannbar mit Schrauben 11 an einem Rollbandschlitten 12 angeschraubt sind. Der Rollbandschlitten 12 ist in einer geeigneten Führung, die nicht näher gezeigt ist, an einem Ausleger 13 quer zur Achse der Werkstückspindel 4 verschiebbar gelagert. Der Ausleger 13 ist an einem Bock 14 befestigt, der seinerseits auf den Maschinenständer 1 aufgeschraubt ist. Die Schleifscheibe 19, die zum Bearbeiten einer Werkstückzahnflanke in eine Zahnlücke des Werkstücks 5 in Eingriff gebracht werden kann, ist in einem Schleifspindelstock 16 höhenverstellbar angeordnet, der seinerseits mit einem Schleifbock 17 schwenkbar verbunden ist. Durch Verändern der Neigung der Schleifscheibe 19 kann deren Eingriffswinkel mit den Werkstückzähnen eingestellt werden. Der Schleifbock 17 kann seinerseits auf dem Maschinenständer 1 auf den gewünschten Schrägungswinkel der Werkstückzähne eingestellt werden.

Der zur Parallelverschiebung des Rollbogenschlittens 2 und des Rollbandschlittens 12 dienende Antrieb ist in Fig. 3 gezeigt. Der Rollbogenschlitten 2 steht mit einer Gewindespindel 20 in Eingriff, die mit einem elektrischen Servomotor 21 gekuppelt ist. Der Rollbandschlitten 12 steht in ähnlicher Weise mit einer Gewindespindel 22 in Eingriff, die mit einem elektrischen Servomotor 23 gekuppelt ist.

Bei der nachfolgenden Betrachtung wird davon ausgegangen, daß der Rollbogenschlitten 2 über die Gewindespindel 20 von dem Servomotor 21 zu einer hin- und hergehenden Bewegung mit dem Hub $s_1$ angetrieben wird, wogegen der Rollbandschlitten 12 relativ zum Maschinenständer 1 ortsfest bleibt. Während der Rollbogenschlitten 2 den Hub $s_1$ ausführt, rollt der Rollbogen 8 an dem ortsfesten Rollbandschlitten 12 ab. Der Drehwinkel des einen Radius $r_0$ aufweisenden Rollbogens 8 ist dabei durch folgende Gleichung bestimmt:

$$\alpha_0 = \frac{s_1 \cdot 180}{r_0 \cdot \pi} \quad [°]$$

Wenn man jetzt den Rollbogen zur Anpassung an ein Werkstück mit einem Durchmesser durch einen anderen Rollbogen mit dem Radius $r_1$ ersetzen würde, dann ergäbe sich folgender Drehwinkel des Rollbogens:

$$\alpha_1 = \frac{s_1 \cdot 180}{r_1 \cdot \pi} \quad [°]$$

Um mit dem Rollbogen 8 vom Radius $r_0$ den gleichen Drehwinkel $\alpha_1$ wie mit einem Rollbogen vom Radius $r_1$ zu erzielen, ist es erforderlich, dem Rollbogen 8 eine zusätzliche Drehbewegung zu überlagern, was durch eine entsprechende translatorische Bewegung des Rollbandschlittens 12 mit dem Hub $s_2$ erfolgt. Für die überlagerte Drehbewegung des Rollbogens 8 gilt folgende Gleichung:

$$\Delta \alpha = \alpha_0 - \alpha_1 = \frac{s_2 \cdot 180}{r_0 \cdot \pi} \quad \left[ {}^{\circ} \right]$$

anders ausgedrückt:

$$\frac{s_1 \cdot 180}{r_0 \cdot \pi} - \frac{s_1 \cdot 180}{r_1 \cdot \pi} = \frac{s_2 \cdot 180}{r_0 \cdot \pi}$$

oder:

$$s_1 - \frac{s_1 \cdot r_0}{r_1} = s_2$$

daraus folgt:

$$S_1 - S_2 = \Delta s = \frac{s_1 \cdot r_0}{r_1}$$

Aus der obigen Gleichung geht hervor, daß der Abstand zwischen dem Rollbogenschlitten 2 und dem Rollbandschlitten 12 dem von dem Rollbogenschlitten 2 zurückgelegten Weg entspricht, wenn der Radius des bearbeiteten Werkstücks dem Radius des Rollbogens 8 entspricht. In diesem Fall bleibt der Rollbandschlitten 12 relativ zum Maschinenständer 1 ortsfest. Mit zunehmendem Radius des Werkstücks relativ zum Radius des Rollbogens 8 nimmt jedoch der Abstand zwischen den beiden Schlitten 2 und 12 relativ zum dem vom Rollbogenschlitten 2 gegenüber dem Maschinenständer 1 zurückgelegten Weg ab. Es ist zu beachten, daß die vorstehende Gleichung nicht nur an den beiden Endpunkten der Bewegung des Rollbogenschlittens, sondern auch an jeder beliebigen Zwischenstellung erfüllt sein muß. Damit diese Bedingung erfüllt ist, ist der Zahnradschleifmaschine eine elektronische Datenverarbeitungsanlage zugeordnet.

Gemäß Fig. 3 ist am Rollbogenschlitten 2 ein sich parallel zu dessen Bewegungsrichtung erstreckender erster Maßstab 25 befestigt. Diesem Maßstab 25 ist ein am Maschinengestell 1 befestigter photoelektrischer Sensor 27 zugeordnet. Am Rollbogenschlitten 2 ist ferner ein zweiter Maßstab 26 befestigt, der sich ebenfalls parallel zur Bewegungsrichtung desselben erstreckt und der in einer den Rollbogen 8 tangierenden Ebene liegt. Dem zweiten Maßstab 26 ist ein am Rollbandschlitten 12 befestigter zweiter photoelektrischer Sensor 28 zugeordnet. Bei dieser Anordnung ermittelt der erste photoelektrische Sensor 27 den Positions-Istwert des Rollbogenschlittens 2 relativ zum Maschinengestell 1, indem er die vom Rollbogenschlitten 2 zurückgelegten Weginkremente zählt. Der zweite photoelektrische Sensor 28 ermittelt hingegen den Positions-Istwert des Rollbandschlittens 12 relativ zum Rollbogenschlitten 2, indem er die gegenüber dem zweiten Maßstab 26 zurückgelegten Weginkremente zählt. Die Meßsignale der beiden photoelektrischen Sensoren 27 und 28 werden in einen Rechner 29 eingegeben. Der Rechner 29 ist programmierbar, indem ein externer Sollwert eingegeben wird. In diesem Sollwert ist einerseits der Hub und die angestrebte Geschwindigkeit des Rollbogenschlittens 2 berücksichtigt, so daß der diesen antreibende Servomotor 21 mit der entsprechenden Drehzahl arbeitet. Zu diesem Zweck liefert der Rechner 29 ein entsprechendes Signal an ein dem Servomotor 21 zugeordnetes Steuerteil 30. In dem vorstehend erwähnten externen Sollwert ist ferner der Radius des zu bearbeitenden Werkstücks 5 berücksichtigt, so daß die Bedingung

$$\frac{\Delta s}{s_1} = \frac{r_0}{r_1}$$

erfüllt ist. Der Rechner 29 gibt ferner ein Signal an ein dem Servomotor 23 zugeordnetes Steuerteil 31 ab.

Wie aus Fig. 3 hervorgeht, ist dem den Rollbogenschlitten 2 antreibenden Servomotor 21 und dem den Rollbandschlitten 12 antreibenden Servomotor 23 jeweils ein Lageregelkreis zugeordnet. Als Führungsgröße für die Lageregelung des Rollbandschlittens 12 dient dabei die Differenz zwischen Ist- und Sollrelativlage zwischen Rollbandschlitten 12 und Rollbogenschlitten 2. Mit dieser Anordnung wird erreicht, daß der Rollbandschlitten 12 in Abhängigkeit von der Bewegung des Rollbogenschlittens 2 von dem zugeordneten Servomotor 23 derart angetrieben wird, daß dem Rollbogen 8 eine solche zusätzliche Drehbewegung überlagert wird, die zum Ausgleich der Differenz zwischen dem Radius $r_0$ des vorhandenen Rollbogens 8 und dem Radius $r_1$ des zu bearbeitenden Werkstücks 5 erforderlich ist.

Im Betrieb der Zahnradschleifmaschine ist darauf zu achten, daß der Radius $r_0$ des eingesetzten Rollbogens 8 nicht größer sein soll als der Radius $r_1$ des zu bearbeitenden Werkstücks 5, damit der Rollbogenschlitten 2 und der Rollbandschlitten 12nicht gegenläufig angetrieben werden. Die erzielbare Bearbeitungsgenauigkeit ist nämlich um so größer, je kleiner die Relativgeschwindigkeit zwischen den beiden Schlitten 2 und 12 ist. Bei einer vorgegebenen Impulsfrequenz des am Rollbandschlitten 12 befestigten photoelektrischen Sensors 28 sind die ermittelten Weginkremente um so kleiner, je kleiner die Geschwindigkeit des Sensors 28 relativ zu dem am Rollbogenschlitten 2 befestigten zweiten Maßstab 26 ist.

Bezugszeichenliste :

| | |
|---|---|
| 1 | Maschinenständer |
| 2 | Rollbogenschlitten |
| 4 | Werkstückspindel |
| 5 | Werkstück |
| 6 | Rollbogengehäuse |
| 7 | Teilungseinrichtung |
| 8 | Rollbogen |
| 9, 10 | Rollbänder |
| 11 | Schrauben |
| 12 | Rollbandschlitten |
| 13 | Ausleger |
| 14 | Bock |
| 16 | Schleifspindelstock |
| 17 | Schleifbock |
| 19 | Schleifscheibe |
| 20 | Gewindespindel von 2 |
| 21 | Servomotor für 20 |
| 22 | Gewindespindel von 12 |
| 23 | Servomotor für 22 |
| 25 | erster Maßstab an 2 |
| 26 | zweiter Maßstab an 2 |
| 27 | photoelektrischer Sensor an 1 |
| 28 | photoelektrischer Sensor an 12 |
| 29 | CNC Rechner |
| 30 | Steuerteil für 21 |
| 31 | Steuerteil für 23 |

**Patentansprüche**

1. Verfahren zur Regelung des Verhältnisses von Rotationsund Translationsbewegung an dem Wälzantrieb einer Zahnradschleifmaschine zum Bearbeiten der Zahnflanken von gerad- oder schrägverzahnten Stirnrädern, bei dem der Rotationsanteil der Wälzbewegung des Werkstücks (5) von Rollbändern (9,10) bewirkt wird, die einerseits an einem quer zur Werkstückachse hin- und hergehend bewegbaren Rollbandschlitten (12) und andererseits auf einem Rollbogen (8) befestigt sind und auf diesem abrollen, wobei der Rollbogen (8) und das Werkstück (5) auf einem parallel zum Rollbandschlitten (12) hin- und hergehend bewegbaren Rollbogenschlitten (2) gelagert sind, und bei dem der Rollbandschlitten (12) und der Rollbogenschlitten (2) zu einer im wesentlichen phasengleichen Bewegung antreibbar sind, wobei das Verhältnis zwischen dem Bewegungshub des Rollbandschlittens (12) einerseits und des Rollbogenschlittens (2) andererseits entsprechend dem Unterschied zwischen dem Durchmesser des Rollbogens (8) einerseits und des Werkstücks (5) andererseits einstellbar ist, dadurch **gekennzeichnet,** daß zur Regelung des Antriebs (23) des Rollbandschlittens (12) in Intervallen einerseits der vom Rollbogenschlitten (2) über Grund zurückgelegte Weg und andererseits die Lage des Rollbandschlittens (12) relativ zum Rollbogenschlitten (2) ermittelt wird, daß das Verhältnis zwischen diesen beiden Meßwerten berechnet und mit einem dem eingestellten Bewegungshubverhältnis entsprechenden Sollwert verglichen wird, und daß die Lage des Rollbandschlittens (12) relativ zum Rollbogenschlitten (2) entsprechend einer festgestellten Abweichung korrigiert wird.

2. Vorrichtung zur Regelung des Verhältnisses von Rotations- und Translationsbewegung an dem Wälzantrieb einer Zahnradschleifmaschine zum Bearbeiten der Zahnflanken von gerad- oder schrägverzahnten Stirnrädern, bei der der Rotationsanteil der Wälzbewegung des Werkstücks (5) von Rollbändern (9,10) bewirkt wird, die einerseits an einem quer zur Werkstückachse hin- und hergehend bewegbaren Rollbandschlitten (12) und andererseits auf einem Rollbogen (8) befestigt sind und auf diesem abrollen, wobei der Rollbogen (8) und das Werkstück (5) auf einem parallel zum Rollbandschlitten (12) hin- und hergehend bewegbaren Rollbogenschlitten (2) gelagert sind, mit einem Maschinengestell (1), in dem der Rollbogenschlitten (2) und der Rollbandschlitten (12) verschiebbar gelagert sind, und mit einer Antriebseinrichtung (21,23) zum näherungsweise phasengleichen Hin- und Herbewegen der beiden Schlitten (2,12), wobei das Verhältnis zwischen dem Bewegungshub des Rollbandschlittens (12) einerseits und des Rollbogenschlittens (2) andererseits entsprechend dem Unterschied zwischen dem Durchmesser des Rollbogens (8) einerseits und des Werkstücks (5) andererseits einstellbar ist, dadurch **gekennzeichnet,** daß dem Rollbogenschlitten (2) und dem Rollbandschlitten (12) jeweils ein Servomotor (21;23) zugeordnet ist, daß eine erste elektrische Meßeinrichtung (25,27) vorgesehen ist, die den vom Rollbogenschlitten (2) relativ zum Maschinengestell (1) zurückgelegten Weg ermittelt, daß eine zweite elektrische Meßeinrichtung (26,28) vorgesehen ist, die die Lage des Rollbandschlittens (12) relativ zum Rollbogenschlitten (2) ermittelt, und daß ein die von den beiden Meßeinrichtungen (25,27;26,28) in Intervallen abgegebenen Signale verarbeitender Rechner (29) vorgesehen ist, der den dem Rollbandschlitten (12) zugeordneten Servomotor (23) zur Einhaltung eines eingestellten Verhältnisses zwischen den Bewegungshüben der beiden Schlitten (2,12) regelt.

3. Vorrichtung nach Anspruch 2, dadurch **gekennzeichnet,** daß die erste elektrische Meßeinrichtung aus einem am Rollbogenschlitten (2) parallel zu dessen Bewegungsrichtung angeordneten ersten Maßstab (25) und aus einer am Maschinengestell (1)dem Maßstab (25) gegenüberliegend angeordneten Photozelle (27)besteht.

4. Vorrichtung nach Anspruch 2 oder 3, dadurch **gekennzeichnet,** daß die zweite elektrische Meßeinrichtung aus einem am Rollbogenschlitten (2) parallel zu dessen Bewegungsrichtung angeordneten zweiten Maßstab (26) und aus einer am Rollbandschlitten (12) dem Maßstab (26) gegenüberliegend angeordneten Photozelle (28) besteht.

5. Vorrichtung nach Anspruch 4, dadurch **gekennzeichnet,** daß der am Rollbogenschlitten (2) angeordnete zweite Maßstab (26) in einer den Rollbogen (8) tangierenden Ebene liegt.

**Claims**

1. A method for controlling the relationship of rotational and translatory movements in the rolling drive of a gear grinding machine for machining the tooth flanks of straight or helical-toothed spur gears, in which the rotational component of the rolling movement of the workpiece (5) is effected by rolling strips (9, 10), which are secured on the one hand on a rolling strip carriage (12), which can he reciprocated transverse to the workpiece axis, and on the other hand on a rolling arc (8) and roll upon said elements, the rolling arc (8) and the workpiece (5) being mounted on a rolling arc carriage (2), which can be reciprocated parallel to the rolling strip carriage (12), and in which the rolling strip carriage (12) and the rolling arc carriage (2) can he driven to produce a substantially in-phase movement, the relationship between the movement stroke of the rolling strip carriage (12) on the one hand and the rolling arc carriage (2) on the other hand being adjustable according to the difference between the diameter of the rolling arc (8) on the one hand and the workpiece (5) on the other hand, characterised in that for controlling the drive (23) of the rolling strip carriage (12), the distance covered by the rolling arc carriage (2) on the one hand and the position of the rolling strip carriage (12) relative to the rolling arc carriage on the other hand are determined at intervals, the relationship between these two measurement values is calculated and compared with a nominal value corresponding to the set movement stroke ratio, and the position of the rolling strip carriage (12) relative to the rolling arc carriage (2) is corrected according to a detected deviation from said nominal value.

2. A device for controlling the relationship of rotational and translatory movements in the rolling drive of a gear grinding machine for machining the tooth flanks of straight or helical-toothed spur gears, in which the rotational component of the rolling movement of the workpiece (5) is effected by rolling strips (9, 10), which are secured on the one hand on a rolling strip carriage (12), which can he reciprocated transverse to the workpiece axis, and on the other hand on a rolling arc (8) and roll upon said elements, the rolling arc (8) and the workpiece (5) being mounted on a rolling arc carriage (2), which can be reciprocated parallel to the rolling strip carriage (12), comprising a machine frame (1), in which the rolling arc carriage (2) and the rolling strip carriage (12) are displaceably mounted, and comprising a drive device (21, 23) for the substantially in-phase reciprocation of the two carriages (2, 12), the relationship between the movement stroke of the rolling strip carriage (12) on the one hand and the rolling arc carriage (2) on the other hand being adjustable according to the difference between the diameter of the rolling arc (8) on the one hand and the workpiece (5) on the other hand, characterised in that a servomotor (21; 23) is associated in each case with the rolling arc carriage (2) and the rolling strip carriage (12), a first electrical measuring device (25, 27) is provided, which determines the distance covered by the rolling arc carriage (2) relative to the machine frame (1), a second electrical measuring device (26, 28) is provided, which determines the position of the rolling strip carriage (12) relative to the rolling arc carriage (2), and a computor (29) processing the signals emitted at intervals by the two measuring devices (25, 27; 26, 28) is provided, which controls the servomotor (23) associated with the rolling strip carriage (12) in order to observe a set relationship between the movement strokes of the two carriages (2, 12).

3. A device according to claim 2, characterised in that the first electrical measuring device is formed by a first scale (25) arranged on the rolling arc carriage (2) parallel to the latter's direction of movement and a photocell (27) arranged on the machine frame (1) opposite the scale (25).

4. A device according to claim 2 or 3, characterised in that the second electrical measuring device is formed by a second scale (26) arranged on the rolling arc carriage (2) parallel to the latter's direction of movement and a photocell (28) arranged on the rolling strip carriage (12) opposite the scale (26).

5. A device according to claim 4, characterised in that the second scale (26) arranged on the rolling arc carriage (2) lies in a plane tangential to the rolling arc (8).

**Revendications**

1. Procédé pour la régulation du rapport de mouvement de rotation et du mouvement de translation sur le mécanisme de génération d'une machine à rectifier les roues dentées, pour l'usinage des flancs de dents des roues dentées droites à denture droite ou oblique, procédé dans lequel la partie de rotation du mouvement de roulement de la pièce d'oeuvre (5) est assurée par des bandes de roulement (9, 10) qui sont, d'une part, fixées à un chariot de bande de roulement (12) susceptible de se déplacer d'un mouvement de va et vient, transversalement par rapport à l'axe de la pièce d'oeuvre, et, d'autre part, à un arc de roulement (8) sur lequel elles se roulent, l'arc de roulement (8) et la pièce d'oeuvre (5) étant montés sur un chariot d'arc de roulement (2) susceptible de se déplacer d'un mouvement de va et vient parallèlement au chariot de bande de roulement (12), et en ce que le chariot de bande de roulement (12) et le chariot d'arc de roulement (2) sont susceptibles d'être déplacés en pratique, en concordance de phase, le rapport entre la course de déplacement du chariot de bande de roulement (12), d'une part, et celle du chariot d'arc de roulement (2), d'autre part, étant susceptible d'être réglé en fonction de la différence entre le diamètre de l'arc de roulement (8) d'une part, et celui de la pièce d'oeuvre (5), d'autre part, procédé caractérisé en ce que pour la régulation de l'entraînement (23) du

7

chariot de bande de roulement (12), on détermine périodiquement, d'une part, le chemin parcouru au-dessus du sol par le chariot d'arc de roulement (2) et, d'autre part, la position du chariot de bande de roulement (12) par rapport au chariot d'arc de roulement (2), en ce que le rapport entre ces deux valeurs de mesure est calculé et comparé à une valeur de consigne correspondant au rapport des courses de déplacement qui a été réglé, et en ce que la position du chariot de bande de roulement (12) par rapport au chariot d'arc de roulement (2) est corrigée de façon correspondante à l'écart constaté.

2. Dispositif pour la régulation du rapport du mouvement de rotation et du mouvement de translation sur le mécanisme de génération d'une machine à rectifier les roues dentées pour l'usinage des flancs de roues droites à denture droite ou oblique, dispositif dans lequel la partie de rotation du mouvement de roulement de la pièce d'oeuvre (5) est assurée par des bandes de roulement (9, 10), qui sont fixées, d'une part, à un chariot de bande de roulement (12) susceptible de se déplacer d'un mouvement de va et vient transversalement par rapport à l'axe de la pièce d'oeuvre, et, d'autre part, à un arc de roulement (8) sur lequel se déroule, l'arc de roulement (8) et la pièce d'oeuvre (5) étant montés sur un chariot d'arc de roulement (2) susceptible de se déplacer d'un mouvement de va et vient parallèlement au chariot de bande de roulement (12), avec un bâti de machine (1) dans lequel sont montés, de façon à pouvoir se déplacer, le chariot d'arc de roulement (2) et le chariot de bande de roulement (12), et avec des moyens d'entraînement (21, 23) pour assurer approximativement, en concordance de phase, le mouvement de va et vient des deux chariots (2, 12), tandis que le rapport entre la course de déplacement du chariot de bande de roulement (12) d'une part, et celle du chariot d'arc de roulement (2), d'autre part, est susceptible d'être réglé de façon correspondante à la différence entre le diamètre de l'arc de roulement (8) d'une part, et celui de la pièce d'oeuvre (5), d'autre part, dispositif caractérisé en ce qu'un servo-moteur (21; 23) est respectivement associé au chariot d'arc de roulement (2) et au chariot de bande de roulement (12), en ce qu'il est prévu un premier dispositif de mesure électrique (25, 27) qui déterminent le chemin parcouru par le chariot d'arc de roulement (2) par rapport au bâti (1) de la machine, en ce qu'il est prévu un deuxième dispositif de mesure électrique (26, 28) qui déterminent la position du chariot de bande de roulement (12) par rapport au chariot d'arc de roulement (2), et en ce qu'il est prévu un calculateur (29) traitant les signaux émis par intervalles par les moyens de mesure (25, 27; 26, 28), ce calculateur réglant le servo-moteur (23) associé au chariot de bande de roulement (12) pour maintenir un rapport réglé entre les courses de déplacement des deux chariots (2, 12).

3. Dispositif selon la revendication 2, caractérisé en ce que les premiers moyens électriques de mesure sont constitués par une première règle graduée (25) disposée sur le chariot d'arc de roulement (2) parallèlement à la direction de déplacement de celui-ci, et par une cellule photo-électrique (27) disposée sur le bâti (1) de la machine, en face de la règle graduée (25).

4. Dispositif selon la revendication 2 ou la revendication 3, caractérisé en ce que les seconds moyens électriques de mesure sont constitués par une seconde règle graduée (26) disposée sur le chariot d'arc de roulement (2) parallèlement à la direction de déplacement de celui-ci et par une cellule photoélectrique (28) disposée sur le chariot de bande de roulement (12), en face de la règle graduée (26).

5. Dispositif selon la revendication 4, caractérisé en ce que la seconde règle graduée (26) disposée sur le chariot d'arc de roulement (2) est placée dans un plan tangent à l'arc de roulement (8).

FIG.1

FIG.2

FIG.3

EP 0 292 642 B1